Europäisches Patentamt

European Patent Office

Office européen des brevets

(11) Publication number: **0 045 210**
**B1**

## EUROPEAN PATENT SPECIFICATION

(45) Date of publication of patent specification: **12.02.86**

(51) Int. Cl.⁴: **B 01 D 53/04**, B 01 D 53/26

(21) Application number: **81303437.8**

(22) Date of filing: **27.07.81**

(54) **An improved cyclic adsorption process.**

(30) Priority: **30.07.80 US 173475**

(43) Date of publication of application:
**03.02.82 Bulletin 82/05**

(45) Publication of the grant of the patent:
**12.02.86 Bulletin 86/07**

(84) Designated Contracting States:
**DE FR GB IT**

(56) References cited:
**DE-C- 608 464**
**US-A-3 866 428**
**US-A-4 134 743**

(73) Proprietor: **Exxon Research and Engineering Company**
**P.O.Box 390 180 Park Avenue**
**Florham Park New Jersey 07932 (US)**

(72) Inventor: **Asher, William Johnston**
**12 Byron Lane**
**Fanwood New Jersey (US)**
Inventor: **Venero, Agustin Francisco**
**31 Stewart Lane**
**Berkeley Heights New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

EP 0 045 210 B1

Courier Press, Leamington Spa, England.

## 0 045 210

**Description**

Applicants' invention relates to adsorption separation processes and specifically adsorption separation processes in which adsorbed material is desorbed from a bed of adsorbent by increasing the temperature of the adsorbent.

There are many commercial processes in which separation of one or more materials is achieved by the general technique of: (1) first contacting a mixture with an adsorbent in an adsorbent zone to selectively adsorb one or more materials of the mixture by the adsorbent material, thereby effecting a separation of the mixture components; and, (2) subsequently desorbing the adsorbent material by increasing the temperature thereof. Typically the desorption is achieved by treating the adsorbent material with an elutant material which has its temperature raised to a point sufficient to promote desorption of the adsorbent material.

In processes of the above type, the adsorption reaction is an exothermic reaction and the heat of adsorption generally is removed from the adsorbent zone. Desorption in these instances, of course is an endothermic reaction and heat is provided in order to desorb the adsorbent material. Commonly, the heat of adsorption is wasted and is not utilized efficiently. This, along with the necessary thermal energy input required to achieve satisfactory desorption, renders adsorption processes less energy efficient than is desired.

As exemplary of some prior art adsorption processes, mention is made of the following: U.S. Patent 2,233,189; U.S. Patent 2,531,916; U.S. Patent 3,009,540; and U.S. Patent 3,274,751.

In U.S. Patent 2,233,189, and air conditioning apparatus is disclosed which has a series of four zones to effect the drying and cooling of air being used in space conditioning. Heat of adsorption is removed from the dried air by heat exchange with atmospheric air. Separate streams of heated gases are used to regenerate the adsorbent beds in that apparatus.

In U.S. Patent 3,274,751, a process for the removal of various materials from an air stream, in addition to temperature and humidity control, is described. Indeed, two distinct systems are contemplated by the patentee; namely, one system which employs two heat exchange beds for removal of sensible heat from a gas stream and another system which employs two adsorbent beds for removing an adsorbate from a gas stream. In the system utilizing adsorbent, the adsorbent material employed may be one which by its nature has some capacity to absorb heat, thereby incidentally affecting limited temperature control of the gas stream being dried by removing sensible heat from the gas stream.

In U.S. Patent 3,009,540 there is yet another air conditioning apparatus disclosed in which moisture is removed from the air being conditioned by an adsorbent material. The external heat requirement for regenerating the adsorbent bed is lowered, in accordance with the patented method, by partially regenerating the bed with air from the conditioned space which has been partially heated by heat exchange with external air being dried and conditioned for use in conditioned space. As will be noted, two distinct zones are employed for drying and for sensible heat recovery.

Desiccant beds suitable for use in these processes are disclosed in U.S. Patent 3,844,737 and U.S. Patent 4,134,743, for example. The beds consist of an adsorbent impregnated or sheets or layers of fibrous materials.

In U.S. Patent 3,531,916, a natural gas dehydrating system is disclosed which has two adsorption zones containing adsorbent material which are used such that one of the two adsorption zones is in adsorption service. Thus, a main gas stream is passed through an activated adsorbent material while a minor heated gas stream passes through the moisture-laden adsorbent material. The beds, of course, are periodically alternated for the continuous drying function.

German patent specification 608464 describes adsorption processes wherein at the gas inlet or outlet sides of the adsorber heat-retaining material is placed behind or before the adsorbent so that vapours must pass through said material when they enter or leave the adsorber. However, there is no disclosure or suggestion of having both a heat capacity material and an adsorbent material in the adsorber.

From the foregoing, it should be apparent that there still remains a need for more energy efficient adsorption separation processes.

In the simplest and broadest sense, the present invention contemplates a cyclic adsorption process in which a fluid stream containing an adsorbate to be removed therefrom is passed through an adsorption zone and wherein the heat of adsorption generated during the adsorption cycle is effectively stored at a sufficiently high temperature whereby only an incremental amount of additional heat is required during the desorption cycle to desorb the adsorbent.

In order effectively to store the heat of adsorption at sufficiently high temperature, heat capacity material is added to the adsorbent in an adsorbent zone thereby effectively increasing the temperature in the adsorbent zone above the temperature which would otherwise exist in that zone in the absence of heat capacity material. To provide for optimum higher operating temperatures, the amount of heat capacity material relative to the amount of adsorbent material used in the adsorbent zone must be an amount sufficient to provide for a rate of progression of a heat transfer front through the adsorbent zone during adsorption which is substantially equal to the rate of progression of the mass transfer front through the adsorbent zone.

In this way the high temperature generated during the adsorption cycle is stored by a heat capacity

2

material in a heat storage zone. During the desorption cycle the higher temperature in the heat storage zone can be effectively used to desorb the adsorbent, thereby reducing the additional heat required for desorption.

Thus, in one embodiment of the present invention, a cyclic adsorption process is provided in which two zones are employed—an adsorption zone and a heat storage zone. The adsorption zone consists of an adsorbent material and a heat capacity material in amounts sufficient to provide for the rate of progression of the thermal front through the adsorbent to be substantially equal to the rate of progression of the mass transfer front through the adsorbent when a fluid mixture containing an adsorbate for removal by adsorption is passed through that zone. The heat storage zone consists of a heat capacity material. In operation, a fluid mixture is passed through the adsorption zone and then through the heat storage zone. The adsorbate is adsorbed by the adsorbent and a portion of the sensible heat of the fluid stream and the heat of adsorption is stored in the adsorption zone for at least a portion of the cycle and a portion of the heat is stored in the heat storage zone. During regeneration of the adsorbent, a fluid regenerating stream is passed through the heat storage zone where it is partially heated. At a point between the adsorption zone and the heat storage zone the regenerating fluid stream is further heated, via an additional heat source, and passed through the adsorbent zone. The amount of additional heat is sufficient to effectively desorb the adsorbent.

In yet another embodiment of the present invention, a desiccant adsorption process is provided in which a pair of rotatable wheels is used through which a stream of gas, e.g., moist air, flows. These wheels are divided generally into three zones. The first zone consists primarily of adsorbent material. The second zone consists of heat capacity material and adsorbent material with the relative quantities adjusted such that during the adsorption portion of the drying cycle the progression of the heat transfer front through the second zone substantially matches the progression of the mass transfer through the second zone. Finally, the third zone consists of a heat capacity material. In operation, the gas to be dried flows through the wheels in the direction of zone 1 to zone 3. Gas for regeneration can be returned through the wheels from zone 3 through zone 1. Means also are provided to transfer heat into the air or inject heated air at a point between zones 2 and 3 for flow in the direction of zone 2 to 1 for regeneration of the adsorbent material.

For a fuller understanding of the nature of the invention, reference should be made to the following detailed description taken in connection with the accompanying drawings in which:

Figure 1 is a graphic representation of the heat transfer front moving through a bed of heat capacity material;

Figure 2 is a graphic representation of a mass transfer front moving through a bed of adsorbent material;

Figure 3 is a schematic diagram illustrating a process in accordance with one embodiment of this invention;

Figure 4 is a schematic diagram illustrating a process in accordance with a second embodiment of this invention; and

Figure 5 is a schematic diagram of a process in accordance with a generally preferred embodiment of the present invention.

In the description which follows, reference is made to specific embodiments of the present invention for the purpose of illustration. Hence, mention is made of water adsorption processes and particularly a desiccant cooling process. Nonetheless, it will become apparent upon further reading of the description which follows that this invention has broad applicability to adsorption/separation processes generally.

Examples of such adsorption processes, in addition to those specifically illustrated hereinafter, in which the invention is eminently suitable, include separation of hydrocarbons such as the separation of isopentane from normal pentane, the separation of isobutane from normal butane and the separation of isohexane from normal hexane. Other important separation processes to which the present invention is applicable include the removal of hydrogen sulfide from a wide variety of light hydrocarbons, the purification of hydrogen in hydrogen manufacture, separation of carbon dioxide from ethylene and the like.

As will become further apparent, the adsorption process of the present invention can be practised using a single packed adsorption bed in a cyclic manner or a multiple set of adsorption beds in a continuous manner.

As will be readily appreciated in passing a fluid containing an adsorbate through an adsorbent bed generally the adsorbate is removed from the fluid rather completely by the adsorbent which the adsorbate first contacts; the adsorbate-free fluid, of course, continues to pass through the bed and out. As more and more fluid containing adsorbate is fed through the bed, an equilibrium eventually is reached with the adsorbent in the upstream portion of the bed and consequently the adsorbate is adsorbed at a point deeper in the bed. Thus, the boundary region between an adsorbate-saturated adsorbant upstream and an adsorbate-free adsorbent downstream in an adsorbent bed has been referred to generally as a mass transfer front or adsorption wave and that front continues to more through the bed as fluid containing adsorbate continues to flow through the bed. When the mass transfer front reaches the end of the bed, the fluid flow must be interrupted and the bed regenerated. Similarly, in a non-isothermal adsorption process, the thermal energy released in the sorption process or introduced with the feed also moves through the bed in the form of a thermal front or wave. In other words, there is a thermal boundary between that part of the bed or zone where heat is being transferred between bed solids and inlet fluid and the section of the bed where fluid and bed solids have attained thermal equilibrium. The rate at which the thermal front progresses through the bed, however, is not the same as the rate at which the mass front progresses through the bed. In this regard, see, for example, Pan et al, *Chem. Eng. Sci.*, 25, p. 1653—1664 (1970).

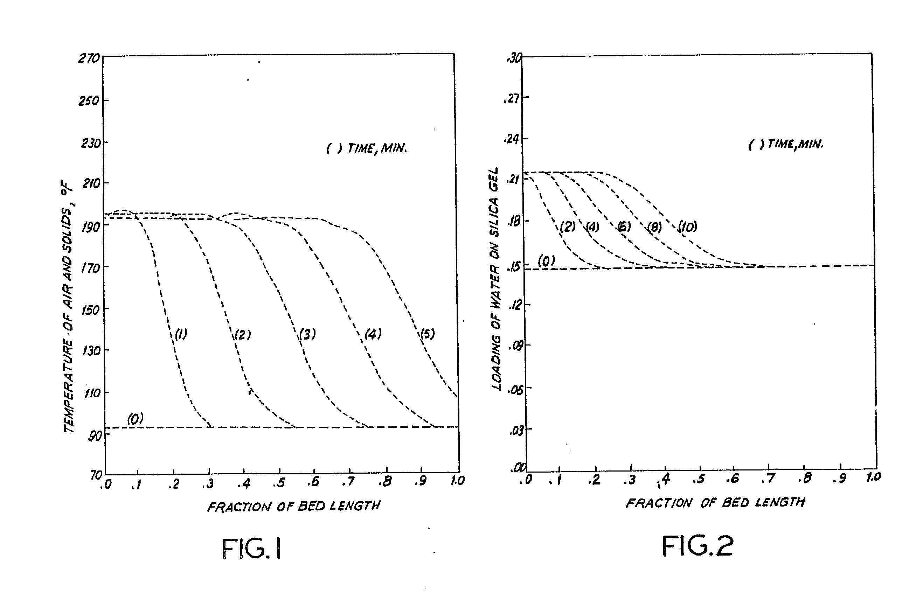

By way of example, Figure 1 graphically illustrates the movement of a heat transfer front through a packed bed of stainless steel balls using a fluid at 194°F flowing through the bed. After between 4 and 5 minutes the thermal front breaks through the end of the bed. Figure 2 graphically illustrates the progression of a mass transfer front through a bed of silica gel using humid air as the fluid being passed through the bed.

As indicated hereinabove, it is a feature of the present invention that more efficient adsorption processes can be achieved if at least a portion of an adsorbent zone is changed with both adsorbent material and heat capacity material and the ratio of heat capacity material to adsorbent is adjusted so that the rate of progression of the heat transfer front through the bed substantially matches the rate of progression of the mass transfer front through the bed. In this manner, the heat initially in the adsorption zone and the heat of adsorption is stored in a heat storage zone at a temperature which is higher than that obtainable otherwise so that the higher temperature stored heat can be used during desorption with only an incremental amount of additional heat necessary to bring about the desorption.

To illustrate the significance of this invention, consider the following computer simulation of the performance of two separate beds in drying moist air, one bed containing solely silica gel and the other bed containing aluminum dispersed in silica gel in the weight ratio of 5:1 of 1.07 Btu/°F/lb (4480 J/kg°C) silicon gel. The total amount of silica gel in each bed is the same. Additional assumptions used are given in Table I below:

TABLE I

| Flow Rate | (1.0 lb air/lb silica gel/min) |
|---|---|
| Initial Bed Temperature | 200°F (93.3°C) |
| Initial Bed Loading | $\dfrac{.021\ lb\ H_2O}{lb\ silica\ gel}$ |
| Inlet Air Temperature | 95°F (35°C) |
| Inlet Air Humidity | $\dfrac{.014\ lb\ H_2O}{lb\ air}$ |

Calculation of the streams leaving the beds in a single step process for an 8 minute period is given in Table II below:

TABLE II

| Bed type | Ave humidity of dry air (lb $H_2O$/lb air) | Ave exit temp of dry air (°F) |
|---|---|---|
| Silica gel | $5.39 \times 10^{-3}$ | 157 (69°C) |
| Silica gel and aluminum | $6.63 \times 10^{-3}$ | 187 (86°C) |

Taking the effluent from the adsorbent bed into a heat storage bed and cycling the beds using the thermal energy stored in the heat storage bed plus an added amount of energy to aid in regeneration (270 Btu/hr/lb silica gel) ($6.28 \times 10^5$ J/hr/kg) upon calculation produces results for the two beds, once they have reached steady state conditions, which are shown in Table III below:

TABLE III

| Bed type | Ave humidity of dry air (lb $H_2O$/lb air) | Ave exit temp of dry air (°F) |
|---|---|---|
| Silica gel | $8.45 \times 10^{-3}$ | 130 (54°C) |
| Silica gel and aluminum | $6.97 \times 10^{-3}$ | 181 (83°C) |

As can be seen from the foregoing simulation, the air leaving the bed containing adsorbent and heat capacity material dispersed with adsorbent is 21% drier than the air leaving the bed containing solely adsorbent. Stated differently, in order for the pure adsorbent bed to provide air having the same average humidity as that obtained with the adsorbent and heat capacity bed, 379 Btu/hr/lb $8.82 \times 10^5$ J/hr/kg) silica gel of energy is required for regeneration. This is 40% more energy than that required by the bed containing both adsorbent and heat capacity material.

From the foregoing, it is apparent that as a fluid containing a component to be adsorbed is passed through an adsorbent bed containing only adsorbent, the heat of adsorption is effectively removed in the form of a separated effluent stream at some temperature higher than the inlet temperature but at a temperature which is lower than required for optimum regeneration of the bed. If the bed, however, contains both an adsorbent material and a heat capacity material as in this invention, then the heat of adsorption is effectively used to raise the temperature of the adsorbent bed and the effluent stream, thereby minimizing the amount of additional heat required to desorb the bed.

The heat capacity material employed in the practice of the present invention can be selected from a wide range of materials, such as metals, plastics, ceramics and the like and used in any number of forms or shapes, such as spheres, fibers, granules, sheets and the like. The heat capacity material, however, should be able to transport heat rapidly in a direction normal to the flow of fluid through the adsorption zone. Indeed, the thermal properties of the zones containing heat capacity material, particularly with the adsorbent, should be such that the difference in temperature between the middle of any particle of heat capacity material and the gas in the plane normal to gas flow through the zone contacting the heat capacity material be less than about 3°F (1.7°C) and preferably less than 1°F (0.55°C).

The adsorbent used, of course, will depend upon the specific adsorption process to be performed. Typical adsorbents useful in the practice of the present invention include silica gel, alumina and zeolites.

As will be readily appreciated, it is difficult to calculate the proper ratio of heat capacity material to adsorbent material for any given separation process, especially since the heat of adsorption commonly is moved back and forth through the adsorption bed in cycling the bed from adsorption through desorption ad infinitum. Also different materials have different heat capacities. Nonetheless, the proper ratios of materials can be selected in the following manner: First the temperature required to desorb from 90% to 95% of a given loading to adsorbate on adsorbent is readily obtainable from published isobar data. The ratio of heat capacity material to adsorbent which will produce this temperature in the bed containing adsorbent and heat capacity material is the preferred ratio. Next, a series of cyclic adsorption tests are performed with a specific test fluid and adsorbent. The ratio of heat capacity material to adsorbent is varied and the temperature of the bed is determined. The amount of heat capacity material is then increased and the test repeated until the optimum temperature is achieved, i.e., the temperature which is sufficient to desorb from about 90% to about 95% of the adsorbate contained in the adsorbent.

As a general guide, the mass of heat capacity material to be used per pound of adsorbent is such that the product of the mass and the heat capacity will be in the range of about 0.2 to about 50 Btu/°F/lb (837 to $2.1 \times 10^5$ J/kg°C) of adsorbent. When the adsorbent is silica gel, this range is from about 0.2 to about 6.0 Btu/°F/lb (837 to $2.5 \times 10^4$ J/kg°C) and preferably 0.5 to 2.0 Btu/°F/lb of silica gel (2093 to 8374 J/kg°C).

As indicated, the present invention contemplates an adsorption process using at least two zones, a first zone containing heat capacity material and adsorbent, as hereinabove described, and a second zone containing solely heat capacity material. Optionally, additional zones containing solely adsorbent material may be employed. For example, at least three separate zones may be employed. The first zone, zone 1, consists substantially entirely of adsorbent material. In the second zone, 2, a combination of heat capacity material and adsorbent is employed. Zone 3 contains solely heat capacity material. Using an optional pure adsorbent zone (zone 1) permits one to take at least partial advantage of the higher temperatures generated in the zone containing adsorbent and heat capacity material while using less total mass than if only a single adsorption zone containing heat capacity material was employed.

If a pure adsorbent zone is employed, as much as 80% of the total adsorbent can be incorporated in that first zone while still obtaining substantial benefit from the remaining 20% of the adsorbent in zone 2; however, in such instances, it is preferable to limit the quantity of adsorbent in zone 1 to 50% of the total adsorbent being employed. The ratio of heat capacity material to adsorbent in the zone containing both materials is selected as hereinabove described and is such that during the adsorption portion of the cycle the progression of the heat transfer front through this zone substantially conforms to the progression of the mass transfer front through this zone. Additionally, it should be noted that the adsorbent used in zone 2 generally is the same adsorbent used in zone 1; however, different adsorbents may be used in zones 1 and 2. As stated, the third zone, zone 3, consists entirely of heat capacity material. The function of this zone is to store heat removed from zones 1 and 2 by the effluent so that it can be utilized for desorption.

It should be appreciated that separate beds or zones may be used in practising this invention. Optionally, however, a single bed with contiguous zones also may be employed.

It has been determined that the quantity of fluid processed during the adsorption step of a cyclic adsorption process utilizing the present invention will affect the overall efficiency achieved by the process. Thus, rather than continue the adsorption cycle to a point just short of breakthrough as is the procedure conventionally employed in adsorption process, it is preferred in the practice of the present invention to empirically determine the preferred amount of fluid that should be treated. One simple technique that can be used in this determination is to vary the cycle time for a given flow of fluid until an optimum efficiency is obtained for that process. The amount of fluid treated which will provide for a high overall efficiency and preferably the optimum overall efficiency will best be used in practising this invention. The amount of fluid to be processed in the practice of the invention can be expressed in terms of mass of fluid processed per unit mass of adsorbent used, e.g., the sum of adsorbent used in zones 1 and 2. In drying ambient air to a suitable level for use in desiccant cooling, for example, 2 to 40 lbs of air/lb of silica gel and preferably 4 to 20 lbs of air/lb of silica gel should be treated.

It also should be appreciated that the fluid being treated need not be the same as the fluid used during the desorption cycle; in any event, however, the product of the specific heat and mass of the fluid used during desorption should not differ by more than 15% and preferably not more than 10% of the product of the specific heat and mass of the fluid treated during the adsorption step.

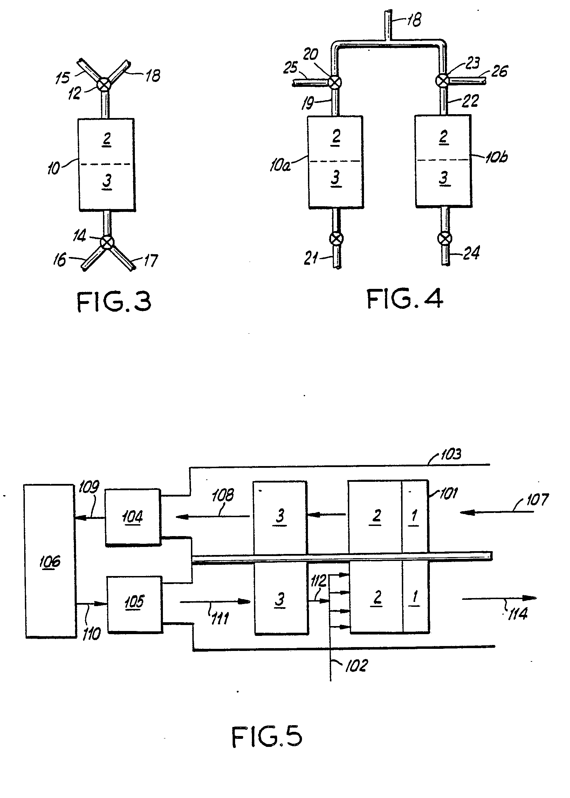

Referring now to a single bed embodiment of the present invention shown in Figure 3, there is provided a bed 10 which is divided into two zones, 2 and 3; zone 2 consisting entirely of adsorbent and heat capacity materials in the ratio prescribed by this invention, and zone 3 consisting entirely of heat capacity material. In this embodiment, the adsorbent bed is shown fitted with two three-way valves 12 and 14. Fluid material to be treated in the adsorbent bed is introduced via line 15 through valve 12 and separated effluent is removed via line 16 through valve 14. During the desorption cycle, an elutant is introduced via line 17 through valve 14 into bed 10 and the elutant and adsorbed material are removed via line 18 through valve 12. The eluting fluid is heated by the heat capacity material in zone 3 of bed 10. At a point prior to the eluting fluid entering zone 2, an incremental amount of heat is provided, for example by an electric resistance heater between zone 2 and zone 3 to raise the temperature of the elutant sufficient to desorb the adsorbent in zone 2. Since some of the heat of adsorption generated during the adsorption cycle is effectively stored at a high temperature, the incremental amount of additional heat required to desorb the bed is considerably less than in adsorption processes in which no heat capacity material is employed in the adsorbent bed.

Referring now to the embodiment as shown in Figure 4, a fluid mixture to be separated is introduced into adsorbent bed 10a via line 18, 19 and three-way valve 20, and effluent is removed via line 21 and a component of the fluid is adsorbed therein. As in the single bed embodiment, bed 10a has two zones, 2 and 3. Zone 2 consists of adsorbent and heat capacity materials, and zone 3 consists entirely of heat capacity material. Means are provided for adding an incremental amount of heat at a point between zone 2 and zone 3 of each bed. When it is time to regenerate bed 10a, the fluid mixture to be separated is fed into adsorbent bed 10b via line 22 and three-way valve 23. Bed 10b, of course, has the same two zones as bed 10a. While the fluid mixture is being separated in bed 10b, bed 10a is regenerated by adding elutant material to bed 10a via line 21. The elutant is heated by the heat capacity material in zone 3 and then further heated by the heating means intermediate zone 2 and zone 3. The desorbed material and the elutant are then removed via line 25.

After regeneration of bed 10a, bed 10b can be regenerated while bed 10a is again used for adsorption by feeding the fluid mixture to be treated through lines 18 and 19 into bed 10a by properly positioning valve 23. For the regeneration of bed 10b, elutant is introduced via line 24 and the desorbed material and elutant are subsequently removed via line 26.

In the desiccant cooling process shown in Figure 5, the system consists of a cylindrical segmented multizone heat exchange and desiccant wheel 101. Indeed, in this embodiment, three zones are shown. These are: Zone 1 containing desiccant; Zone 2 containing desiccant and heat capacity material; and Zone 3 containing solely heat capacity material.

In Figure 5, zone 3 is shown as being distributed around an axis common to zones 1 and 2 and as being noncontiguous with zone 2 and separated therefrom. This distinct separation, however, is not necessary and zone 3 optionally is contiguous with zone 2.

Gas channels are provided in wheel 101 for the introduction of heated elutant fluid as shown by line 102. The direction of flow of stream 102 is indicated by the terminal arrows.

Wheel 101 is within a housing 103 for appropriately dividing the flow of gas through the desiccant and heat adsorbing material. Additionally, conventional air cooling water evaporators 104 and 105 are provided.

In the normal cooling operation, ambient outside air 107 is introduced into the segmented portion of the rotating wheel 101 by a fan (not shown). Moisture in the air is adsorbed by the hygroscopic material in zone 1 and subsequently by the material in zone 2. Much of the heat of adsorption is taken up by the heat capacity material in zone 2. Since the dry air now is at a higher temperature than the incoming ambient or moist air, it is passed through a heat capacity material in zone 3 where the temperature of the dry air is lowered. After passing over zone 3, the dry air 108 with its temperature lowered is then passed through the evaporator 104. Water is evaporated into the dry air and the latent heat of vaporization is thereby extracted from the air, cooling it. The cool moist air stream 109 is then passed into the space to be conditioned 106. Relatively warm air 110 from the conditioned space is then introduced into evaporator 105 where water is evaporated into the air and the latent heat of vaporization is extracted from the air, thereby lowering its temperature. This now cooler moist air stream 111 is then introduced into the segmented portion of heat capacity zone 3 of wheel 101 where it has its temperature raised by the thermal energy stored in this portion of the wheel. The effluent stream 112 is further heated by heat exchanger 102 and introduced into zone 2 of wheel 101 where it is used to desorb the desiccant. The resultant warm moist air is rejected via line 114 to the outside. The heat which has been added to this stream is used to desorb the previous adsorbed water from desiccant in zone 2 and increases the temperature of both the desiccant and heat capacity material in zone 2. The very moist flows through zone 1 and is rejected to the outside via line 114.

6

The elevated temperature heat front moves through zone 2 and perhaps some of zone 1 but is prevented from reaching the outlet end of zone 1 so that the very moist air leaving through line 114 to complete the cycle is only at a moderately higher temperature (about 15°F) (8°C) than ambient air.

Heat can be provided to heat exchanger 102 by conventional means such as via a gas firing or an electric heater. Alternatively and preferably, heat is provided by a solar heater.

One of the significant advantages of the present invention is that by storing the heat of adsorption in the bed at high temperature, the incremental amount of heat necessary to desorb the bed is relatively small, and consequently, the overall efficiency of the process is greatly enhanced. Moreover, in a solar assisted desiccant cooling process, the amount of solar collector area required for bed regeneration is significantly reduced, thereby significantly lowering the capital cost of such a system since the cost of the solar collector is a major factor in the cost of the system.

Example

To further illustrate the improvement obtained in accordance with the present invention, the following test was conducted:

A bed six inches (15.2 cm) in diameter and five inches (12.7 cm) in length was charged with silica gel and aluminum of 8—20 mesh size to provide two zones as follows:

Zone 1: solely silica gel, one inch (2.54 cm) long

Zone 2: silica gel and aluminum in the weight ratio of 1:13 or 2.78 Btu/°F/lb ($1.10 \times 10^4$ J/kg°C) of desiccant four inches long.

A heat storage or third zone, was provided which was six inches (15.2 cm) in diameter and five inches (12.7 cm) long and charged with stainless steel balls one inch (2.54 cm) in diameter. An air stream with an absolute humidity of 0.014

$$\frac{\text{lb } H_2O}{\text{lb air}}$$

and a temperature of 95°F (35°C) was fed through zones 1, 2 and 3 at a rate of .95 lb air/lb silica gel/min. The regeneration of the bed was performed using air of the same humidity and the same flow rate passing through zones 3, 2 and 1 in that order. The energy needed in the regeneration was provided by the energy stored in zone 3 during the air drying step and by an electric heater operating at a rate of 90 watts which is substantially equivalent to 263 Btu/hr/lb ($6.12 \times 10^5$ J/hr/kg) silica gel. Table IV gives the average humidity leaving the desiccant/heat capacity bed under steady state conditions. This value is compared with the calculated values for a similar desiccant/heat capacity bed and a pure silica gel bed under the same conditions. All the beds compared have the same total amount of silica gel and the same heat storage zone. Total cycle time was 12 minutes divided equally between the drying step and the regeneration step.

TABLE IV

| Bed type | Exptl. ave. humidity $\frac{\text{lb } H_2O}{\text{lb air}}$ | Calc. ave. humidity $\frac{\text{lb } H_2O}{\text{lb air}}$ |
|---|---|---|
| Silica gel/alumina | .0078 | .0079 |
| Pure silica gel | | .0090 |

From the foregoing it can be seen that for the same amount of energy used in the regeneration, the process of this invention provides an air stream that is drier by 14% than that calculated for a bed using solely silica gel. In terms of energy used, 680 Btu per pound ($7.58 \times 10^6$ J/kg) of water removed from the air stream was required in the process of the invention as compared with 840 Btu, or 21% more energy, per pound ($1.95 \times 10^6$ J/kg) of water removed from the bed containing solely silica gel.

**Claims**

1. A cyclic adsorption process comprising:

passing a fluid stream containing an adsorbate to be removed therefrom through an adsorption zone and then through a heat storage zone, said adsorption zone containing an adsorbent and also heat capacity material, said heat capacity material being present in an amount sufficient to provide a temperature in said adsorption zone under operating conditions which is higher than the temperature that otherwise would exist in said adsorption zone under operating conditions;

regenerating said adsorbent by passing a regeneration stream through said heat storage zone and then through said adsorption zone whereby said regeneration stream is heated in said heat storage zone; and

# 0 045 210

adding an incremental amount of heat to said regeneration stream at a point between said heat storage zone and said adsorption zone, said incremental amount of heat being sufficient to raise the temperature of said regeneration stream to a point sufficient for removing said adsorbate from said adsorbent in said adsorption zone whereby said adsorbent is regenerated.

2. A cyclic adsorption process according to claim 1 wherein a heat transfer front and a mass transfer front are generated through passage and progress through said adsorption zone and said heat storage zone of said fluid stream, and wherein said adsorbent and said heat capacity material are present in a weight ratio sufficient to provide for a rate of progression of said heat transfer front through said adsorption zone which is substantially equal to the rate of progression of said mass transfer front through said adsorption zone.

3. A process according to either of claims 1 to 2 wherein the amount of heat capacity material per pound of adsorbent in said adsorption zone is such that the mass of heat capacity material times its heat capacity is in the range of from about 0.2 to 50 Btu's/°F/lb (837 to $2.1 \times 10^5$ J/kg°C) of adsorbent.

4. A process according to claim 3 wherein the desiccant is silica gel and the ratio of heat capacity material per pound of silica gel in said adsorption zone is such that the product of mass of the heat capacity material times the heat capacity of such material is in the range of from about 0.2 to 6.0 Btu/°F/lb (837 to $2.5 \times 10^4$ J/kg°C) of silica gel.

5. A process according to claim 4 wherein the desiccant is silica gel and the ratio of heat capacity material per pound of silica gel in said adsorption zone is such that the product of mass of the heat capacity material times the heat capacity of such material is in the range of from about 0.5 to 2.0 Btu/°F/lb (2093 to 8374 J/kg°C).

6. A process according to claim 3 wherein the product of the specific heat and the mass of the regeneration stream used is not more than 15% greater than the product of the specific heat and mass of fluid stream used.

7. A desiccant cooling process which comprises:

passing ambient air through a desiccant zone according to claim 4 to produce relatively dry air;

passing said relatively dry air through a heat storage zone to produce relatively cool dry air for use in an enclosed conditioned space;

withdrawing a stream of exhaust air from said conditioned space through an evaporative pad whereby said exhaust air is cooled;

passing said cooled exhaust air stream through said heat storage zone whereby said heat storage zone is cooled when said exhaust air is heated;

adding additional heat to said exhaust gas by heating means;

passing said heated exhaust air through said adsorption zone, whereby said adsorbent is regenerated.

## Revendications

1. Procédé cyclique d'adsorption, caractérisé en ce qu'il comprend les opérations consistant:

à faire passer un courant de fluide contenant un adsorbat dont il faut le débarrasser à travers une zone d'adsorption puis à travers une zone de stockage de chaleur, ladite zone d'adsorption contenant un adsorbant et aussi du matériau à capacité calorifique, ledit matériau à capacité calorifique étant présent en quantité suffisante pour établir dans ladite zone d'adsorption dans les conditions de fonctionnement une temperature supérieure à celle qui existerait autrement dans cette zone d'adsorption dans les conditions de fonctionnement;

à régénérer ledit adsorbant en faisant passer un courant de régénération à travers ladite zone de stockage de chaleur puis à travers ladite zone d'adsorption en sorte que ce courant de régénération soit chauffé dans ladite zone de stockage de chaleur; et

à ajouter une quantité de chaleur supplémentaire audit courant de régénération en un point situé entre ladite zone de stockage de chaleur et ladite zone d'adsorption, cette quantité supplémentaire de chaleur étant suffisante pour porter la température dudit courant de régénération à une valeur suffisante pour éliminer ledit adsorbat de l'adsorbant dans ladite zone d'adsorption de façon à régénérer ledit adsorbant.

2. Procédé d'adsorption cyclique selon la revendication 1, caractérisé en ce qu'un front de transfert de chaleur et un front de transfert de masse sont engendrés par passage et progression dudit courant de fluide à travers ladite zone d'adsorption et ladite zone de stockage de chaleur, et en ce que ledit adsorbant et ledit matériau à capacité calorifique sont présents dans un rapport de poids suffisant pour établir une vitesse de progression dudit front de transfert de chaleur à travers la zone d'adsorption sensiblement égale à la vitesse de progression dudit front de transfert de masse à travers ladite zone d'adsorption.

3. Procédé selon les revendications 1 ou 2, caractérisé en ce que la quantité de matériau à capacité calorifique par kilo d'adsorbant dans ladite zone d'adsorption est telle que le produit de la masse du matériau à capacité calorifique par la capacité calorifique de ce matériau soit compris entre 837 et $2,1 \times 10^5$ J/kg.°C d'adsorbant (0,2 à 50 Btu/°F/lb).

4. Procédé selon la revendication 3, caractérisé en ce que le desséchant est du gel de silice et la quantité de matériau à capacité calorifique par kilo de gel de silice dans ladite zone d'adsorption est telle que le produit de la masse du matériau à capacité calorifique par la capacité calorifique de ce matériau est compris entre environ 837 et $2,5 \times 10^4$ J/kg.°C de gel de silice.

8

5. Procédé selon la revendication 4, caractérisé en ce que le desséchant est du gel de silice et la quantité de matériau à capacité calorifique par kilo de gel de silice dans ladite zone d'adsorption est telle que le produit de la masse du matériau à capacité calorifique par la capacité calorifique de ce matériau est compris entre environ 2093 et 8374 J/kg.°C.

6. Procédé selon la revendication 3, caractérisé en ce que le produit de la chaleur spécifique par la masse du courant de régénération utilisé n'est pas supérieur de plus de 15% au produit de la chaleur spécifique par la masse du courant de fluide utilisé.

7. Procédé de refroidissement et desséchement caractérisé en ce qu'il comprend les opérations consistant:

à faire passer de l'air ambiant à travers une zone de dessication selon la revendication 4 pour obtenir de l'air relativement sec;

à faire passer ledit air relativement sec à travers une zone de stockage de chaleur pour obtenir de l'air relativement sec et froid pour utilisation dans un espace conditionné clos;

à retirer dudit espace conditionné un courant d'air d'extraction à travers un coussin évaporateur de façon à refroidir ledit air extrait;

à faire passer ledit air extrait refroidi à travers ladite zone de stockage de chaleur de façon que cette zone de stockage de chaleur soit refroidie quand ledit air extrait est chauffé;

à ajouter à l'aide de moyens de chauffage un appoint de chaleur audit gaz extrait;

à faire passer ledit air extrait chauffé à travers ladite zone d'adsorption, de façon que ledit adsorbant soit régénéré.

## Patentansprüche

1. Cyclisches Adsorptionsverfahren, dadurch gekennzeichnet, daß man

einen Fluidstrom, der ein daraus zu entfernendes Adsorbat enthält, durch eine Adsorptionszone und dann durch eine Wärmespeicherzone leitet, wobei die Adsorptionszone ein Adsorbens und außerdem ein Wärmeaufnahmematerial enthält, wobei das Wärmeaufnahmematerial in einer ausreichenden Menge vorhanden ist, um in der Adsorptionszone bei Betriebsbedingungen eine Temperatur zu liefern, die höher ist als die Temperatur, die sonst unter Betriebsbedingungen in der Adsorptionszone herrschen würde;

das Adsorbens regeneriert, indem man einen Regenerierstrom durch die Wärmespeicherzone und dann durch die Adsorptionszone leitet, wodurch der Regenerierstrom in der Wärmespeicherzone erwärmt wird; und

dem Regenerierstrom eine zusätzliche Wärmemenge an einem Punkt zwischen der Wärmespeicherzone und der Adsorptionszone zuführt, wobei die zusätzliche Wärmemenge ausreichend ist, die Temperatur des Regenerierstroms auf eine Temperatur zu erhöhen, die für die Entfernung des Adsorbats von dem Adsorbens in der Adsorptionszone ausreicht, so daß das Adsorbens regeneriert wird.

2. Cyclisches Adsorptionsverfahren nach Anspruch 1, dadurch gekennzeichnet, daß durch das Durchströmen und das Fortschreiten des Fluidstroms durch die Adsorptionszone und die Wärmespeicherzone eine Wärmeübertragungsfront und eine Stoffaustauchfront erzeugt werden und daß das Adsorbens und das Wärmeaufnahmematerial in einem ausreichenden Gewichtsverhältnis vorhanden sind, um eine Fortpflanzungsgeschwindigkeit der Wärmeübertragungsfront durch die Adsorptionszone zu liefern, welche im wesentlichen gleich der Fortpflanzungsgeschwindigkeit der Stoffaustauschfront durch die Adsorptionszone ist.

3. Verfahren nach einem der Ansprüche 1 oder 2, dadurch gekennzeichnet, daß die Menge des Wärmeaufnahmematerials je 0,454 kg Adsorbens in der Adsorptionszone so groß ist, daß die Masse des Wärmeaufnahmematerials multipliziert mit seiner Wärmekapazität im Bereich von etwa 837 bis $2,1 \times 10^3$ J/Kg°C Adsorbens beträgt.

4. Verfahren nach Anspruch 3, dadurch gekennzeichnet, daß das Trocknungsmittel Silicagel ist und das Verhältnis von Wärmeaufnahmematerial je 0,454 Kg Silicagel in der Adsorptionszone so groß ist, daß das Produkt aus Masse des Wärmeaufnahmematerials und Wärmekapazität dieses Materials im Bereich von etwa 837 bis $2,5 \times 10^4$ J/Kg°C Silicagel liegt.

5. Verfahren nach Anspruch 4, dadurch gekennzeichnet, daß das Trocknungsmittel Silicagel ist und das Verhältnis von Wärmeaufnahmematerial je 0,454 Kg Silicagel in der Adsorptionszone so groß ist, daß das Produkt aus Masse des Wärmematerials und Wärmekapazität dieses Materials im Bereich von etwa 2093 bis 8374 J/Kg°C liegt.

6. Verfahren nach Anspruch 3, dadurch gekennzeichnet, daß das Produkt aus spezifischer Wärme und Masse des verwendeten Regenerierstroms nicht mehr als 15% größer ist als das Produkt der spezifischen Wärme und der Masse des verwendeten Fluidstroms.

7. Trocknungskühlungsverfahren, dadurch gekennzeichnet, daß man

Luft mit Raumtemperatur durch eine Trocknungsmittelzone gemäß Anspruch 4 leitet, um verhältnismäßig trockene Luft zu erzeugen;

die verhältnismäßig trockene Luft durch eine Wärmespeicherzone leitet, um verhältnismäßig kühle trockene Luft zur Verwendung in einem angeschlossenen klimatisierten Raum zu erzeugen;

einen Abluftstrom aus dem klimatisierten Raum durch ein Verdampfungskissen entnimmt, wodurch die Abluft gekühlt wird;

9

den gekühlten Abluftstrom durch die Wärmespeicherzone leitet, wodurch die Wärmespeicherzone gekühlt wird, während die Abluft erwärmt wird;

der Abluft durch Heizvorrichtungen zusätzliche Wärme zuführt; und

die erwärmte Abluft durch die Adsorptionszone leitet, wodurch das Adsorbens regeneriert wird.

FIG.2

FIG.1

FIG.3

FIG.4

FIG.5